# DEMANDE DE BREVET EUROPEEN

(11) **EP 2 575 132 A1**
(43) Date de publication de la demande: **03.04.2013**
(21) Numéro de dépôt: 11306227.7
(22) Date de dépôt: 27.09.2011
(51) Int. Cl.: G11B 27/10, H04N 21/2343, G06F 17/30, H04N 5/262, G11B 27/034

(54) **Procédé pour segmenter un document en utilisant la segmentation d'un document de référence, et appareil associé**

(71) Demandeur: Thomson Licensing, 92130 Issy-les-Moulineaux (FR)
(72) Inventeur: Autier, Ingrid, 35410 Domloup (FR); Thudor, Franck, 35000 Rennes (FR); Oisel, Lionel, 35137 La Nouaye (FR)
(74) Mandataire: Schmidt-Uhlig, Thomas

(57) **Abrégé**

L'invention concerne un procédé pour segmenter un document audiovisuel disponible selon au moins deux versions, une première version dudit document étant préalablement segmentée et chaque segment associé à un identificateur. Le procédé comporte une première étape de corrélation des images de la version de référence dudit document et des images d'une autre version dudit document afin de déterminer l'identité entre des images de la version de référence dudit document et d'une autre version dudit document, une étape de découpage en segments continus d'images de l'autre version dudit document, une partie au moins des images d'un segment de l'autre version dudit document étant identiques à des images d'un même segment de la version de référence dudit document, et les images d'un segment de la version de référence dudit document étant identiques à des images d'un seul segment de l'autre version dudit document, une étape d'affectation des identificateurs des segments de la version de référence dudit document aux segments correspondants de l'autre version dudit document. L'invention concerne également un appareil de traitement mettant en oeuvre le procédé.

## Description

La présente invention concerne la présentation de documents audiovisuels divisés en chapitres. Un utilisateur choisit dans une bibliothèque un document audiovisuel et lance sa reproduction. Pour que l'utilisateur puisse accéder à certains chapitres du document, il est préférable de le segmenter et d'associer le document à un menu de navigation permettant de sélectionner directement le chapitre souhaité. La segmentation qui s'effectue généralement par le producteur du document ou par le diffuseur, répond à une logique déterminée qui peut être basée sur des critères formels ou artistiques. Par exemple, le document peut être découpé en séquences de durée égale. Une autre manière consiste à détecter les scènes ou les plans et à attribuer à chacun un numéro. Dans le menu de navigation, l'utilisateur introduit et valide un numéro, la scène ou le plan correspondant est alors reproduit, suivi ou non du reste du document. Le document peut aussi être découpé en plusieurs chapitres dont chacun recèle une certaine unité sémantique. Ainsi, de la même façon qu'un livre possède des chapitres associés à un titre, les chapitres du document sont associés à des identificateurs permettant à l'utilisateur de choisir le chapitre qu'il souhaite reproduire, ou le chapitre à partir duquel il désire reproduire le document. Dans un menu de navigation, l'identificateur est un titre ou une image fixe ou une séquence animée ou un extrait musical, etc. une combinaison de ces différents éléments est aussi possible. Généralement, les données de chapitrage sont associées au document. Par exemple, un support DVD contient à la fois le contenu audiovisuel, les adresses de segmentation et les données de chapitrage. Certains supports autorisent le rajout d'informations complémentaires à l'identificateur, notamment une série d'images clefs extraites du chapitre, un résumé du chapitre, le nom des acteurs présents, ou la durée. D'autres informations complémentaires sont également envisageables par l'homme de l'art.

Selon le fournisseur ou le support, un même document peut comporter des différences. Par exemple, des scènes peuvent être coupées pour diverses raisons : contenu trop violent, contenu contraire à la religion, élimination de contenu publicitaire, etc. Un même document peut donc exister sous différentes versions, chaque version possédant sa propre segmentation. Certaines versions peuvent avoir une segmentation limitée à un seul segment. Un même film peut se présenter dans sa version cinéma, dans la version disponible en DVD, ou dans des versions spécifiques à des zones géographiques ou culturelles données. Le découpage des segments de chaque version ainsi que le nombre des segments varient d'une version à une autre. Si un utilisateur télécharge un document en spécifiant son titre et demande à voir (ou revoir) un chapitre spécifique, le contenu audiovisuel n'est pas forcément le même selon les versions disponibles.

Il existe donc un réel besoin de segmenter un document en fonction d'un unique document de référence.

Un procédé pour segmenter un document audiovisuel disponible selon au moins deux versions, une première version dudit document dite « de référence » étant préalablement segmentée et chaque segment associé à un identificateur, est ainsi proposé. Le procédé comporte :
une première étape de corrélation des images de la version de référence et des images d'une autre version dudit document à segmenter, pour déterminer l'identité entre des images de la version de référence et de l'autre version dudit document à segmenter,
une étape de découpage en segments continus d'images de l'autre version dudit document, une partie au moins des images d'un segment de l'autre version dudit document étant identiques à des images d'un même segment de la version de référence dudit document, et les images d'un segment de la version de référence dudit document étant identiques à des images d'un seul segment de l' autre version dudit document,
une étape d'affectation des identificateurs des segments de la version de référence dudit document aux segments correspondants de l'autre version dudit document. Il est bien entendu possible de segmenter plusieurs autres versions du document de référence grâce au procédé.

De cette façon, l'opérateur d'un serveur ou un utilisateur disposant d'un terminal peut traiter un document qui peut ne pas être préalablement chapitré pour bénéficier des chapitres élaborés à partir d'une version de référence de ce document.

Selon une première variante, si au moins un segment de la version de référence dudit document n'est pas présent dans l'autre version dudit document, alors le segment de l'autre version dudit document qui précède ou qui suit le segment qui n'est pas présent, est découpé chronologiquement en une première et au moins une seconde partie, chaque identificateur de l'au moins un segment qui n'est pas présent étant associé à une seconde partie. De cette façon, même si le document à segmenter ne contient pas l'ensemble des chapitres du document de référence, tous les identificateurs de chapitre du document de référence sont présents pour naviguer dans le document nouvellement segmenté.

Selon un perfectionnement de la première variante, toutes les parties du segment de l'autre version dudit document qui précède ou qui suit le segment qui n'est pas présent ont des durées égales. De cette façon, les chapitres ainsi créés ont des tailles maximales. Selon une variante du dernier perfectionnement, le découpage entre chaque partie du segment de l'autre version dudit document qui précède ou qui suit le segment qui n'est pas présent s'effectue lors d'une transition de séquence. De cette façon, une même séquence ne se trouve pas coupée pour être présente dans deux chapitres consécutifs.

Selon une autre variante, si un segment de la version de référence dudit document n'est pas présent dans l'autre version dudit document, alors l'identificateur du segment non présent est rajouté aux identificateurs de l'autre version dudit document et une indication signifiant que ledit segment n'est pas présent est reproduite. De cette façon, l'utilisateur a connaissance de l'absence d'un chapitre dans le document qu'il a téléchargé et peut avoir connaissance de son identificateur.

Selon une autre variante, si une partie d'un segment de l'autre version dudit document n'est pas présente dans la version de référence dudit document, alors ladite partie est associée à un nouvel identificateur non utilisé pour identifier des segments de la version de référence dudit document. De cette façon, l'utilisateur peut avoir connaissance de parties supplémentaires présentes dans le document nouvellement segmenté mais non présentes dans le document de référence. Selon un perfectionnement de ce dernier aspect, la partie d'un segment de l'autre version dudit document non présente dans la version de référence dudit document est associée à un nouvel identificateur si la durée de ladite partie est supérieure à une durée déterminée. De cette façon, les nouveaux chapitres ont une durée de reproduction minimale. Selon un autre perfectionnement de ce premier aspect, la visualisation de l'autre version dudit document ne concerne que les parties qui sont présentes dans la version de référence dudit document. De cette façon, il est possible de zapper les parties supplémentaires qui ne sont pas dans le document de référence.

Selon un autre aspect, des informations complémentaires autres que l'identificateur sont associées à chaque segment de la version de référence dudit document, ledit procédé comprenant une étape d'association des informations complémentaires aux segments correspondant à l'autre version dudit document, lesdites informations complémentaires étant accessibles en sélectionnant le segment correspondant de l'autre version dudit document. Ainsi, l'utilisateur peut avoir connaissance de ces informations pour choisir le chapitre qui l'intéresse. Selon un autre aspect, les identificateurs associés à chaque segment de l'autre version dudit document sont affichés et la sélection d'un identificateur déclenche la reproduction du segment de l'autre version dudit document associé. De cette façon, l'utilisateur peut naviguer dans les différents chapitres du document.

Un appareil de traitement de document multimédia comprenant un moyen de stockage d'une première version d'un document dite « de référence » et de l'autre version dudit document est également proposé. Cet appareil comporte :
un moyen de corrélation des images de la version de référence dudit document et des images d'une autre version dudit document afin de déterminer l'identité entre des images de la version de référence dudit document et de l'autre version dudit document, la corrélation prenant en compte la chronologie des images dans chacune des versions dudit document,
un moyen de découpage en segments continus d'images de l'autre version dudit document, une partie au moins des images d'un segment de l'autre version dudit document étant identiques à des images d'un même segment de la version de référence dudit document, et les images d'un segment de la version de référence dudit document étant identiques à des images d'un seul segment de l'autre version dudit document,
un moyen d'affectation des identificateurs des segments de la version de référence dudit document aux segments correspondants de l'autre version dudit document.

D'autres caractéristiques et avantages de l'invention apparaîtront à travers la description d'un exemple de réalisation non limitatif de l'invention, explicité à l'aide des figures jointes, parmi lesquelles :
- la figure 1 est un diagramme bloc d'un appareil de réception et d'enregistrement de documents audiovisuels selon un exemple de réalisation,
- la figure 2 est un schéma montrant un terminal selon un exemple de réalisation de l'invention,
- la figure 3 représente plusieurs schémas montrant une première façon de chapitrer un document par rapport à un document de référence,
- la figure 4 représente plusieurs schémas montrant une seconde façon de chapitrer un document par rapport à un document de référence,
- la figure 5 représente plusieurs schémas montrant une troisième façon de chapitrer un document par rapport à un document de référence,
- la figure 6 représente un organigramme illustrant le procédé pour segmenter un document selon un exemple de réalisation,
- la figure 7 est un exemple de représentation d'une apparence d'écran montrant la navigation au sein d'un document chapitré.

Pour faciliter la description, l'invention sera décrite ci-après dans le cadre de la recherche et de l'utilisation d'un document multimédia (notamment l'enregistrement, la reproduction ou la transmission vers un autre utilisateur). Par document multimédia, il faut comprendre tout document audio et/ou visuel que l'on peut télécharger à l'aide d'un identificateur.

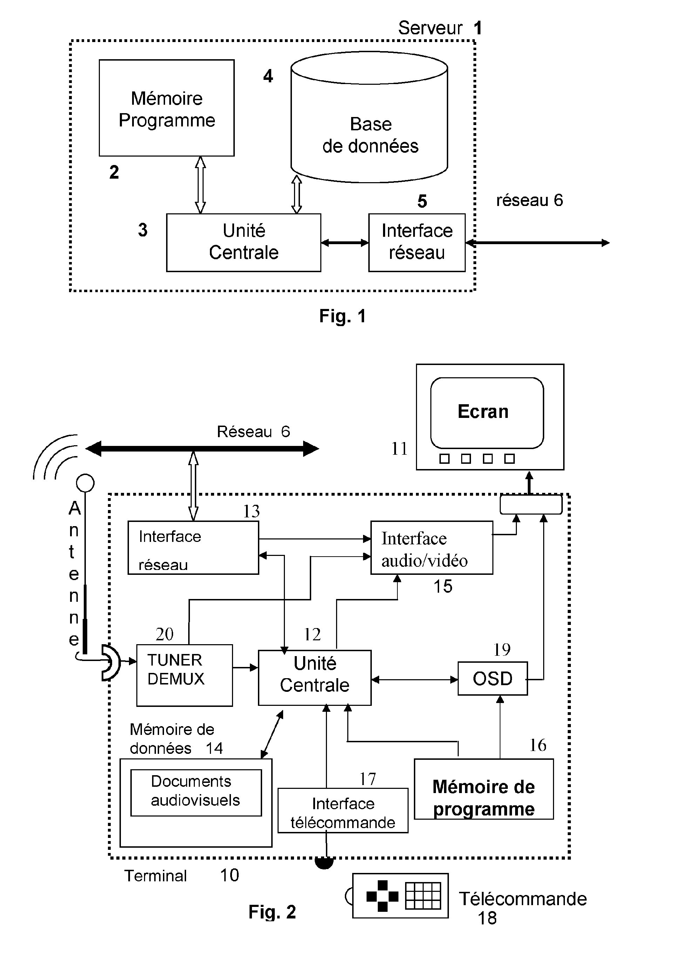

Selon un exemple de réalisation, un serveur dispose d'un document de référence préalablement chapitré et reçoit d'autres versions de ce document afin de les segmenter selon le découpage existant dans le document de référence. Un exemple d'un tel serveur est décrit par la figure 1. Le serveur 1 comprend au moins une mémoire de programme 2, une unité centrale 3, une mémoire contenant une base de donnée 4 réalisée préférentiellement par un disque dur et une interface de communication 5 réalisant une liaison bidirectionnelle avec un réseau 6 (Internet par exemple) avec des terminaux. La base de données 4 contient au moins un document audiovisuel dit « de référence ». Ce document est chapitré et est considéré comme le document officiel. Il existe d'autres versions de ce document au sein du réseau, ces versions ou copies ne sont pas officielles, elles peuvent être chapitrées ou non, et leurs durées de reproduction peuvent être différentes (en plus ou en moins) de celle du document de référence.

Selon une variante, les documents de référence sont présents au niveau du serveur 1 sous la forme de DVD. Le DVD est introduit manuellement ou automatiquement dans un lecteur (non représenté dans la figure 1). De même, le contenu à segmenter peut se présenter sous la forme d'un DVD, auquel le serveur 1 rajoute des informations de segmentation. De façon optionnelle, si le document de référence dispose d'informations complémentaires associées au segment, comme un titre par un exemple, ces informations peuvent être ajoutées au document à segmenter. Le serveur 1 peut être également en relation avec le gestionnaire d'un réseau de diffusion grâce à une interface (non représentée). Des terminaux entrent en communication avec le serveur 1 afin de recevoir une autre version du document segmenté en utilisant le découpage du document de référence. A noter qu'il n'est pas nécessaire de recevoir l'intégralité du document avec sa nouvelle segmentation mais les informations de segmentation suffisent dans le cadre de la présente invention.

La figure 2 est un diagramme bloc d'un exemple de terminal 10 communiquant avec le serveur 1. Si le terminal 10 n'est pas lui-même déjà équipé d'un moyen d'affichage, il envoie des signaux d'affichage à un écran de visualisation 11. Le terminal 10 possède une unité centrale 12 reliée à un circuit de communication bidirectionnel 13 pour la transmission de données à travers le réseau 6 qui lui permet de communiquer avec un serveur, tel que le serveur. Cette liaison permet de transmettre des requêtes de recherche vers des serveurs distants et de recevoir des données audiovisuelles en vue d'un stockage. Ce réseau est par exemple Internet. Les sections ou paquets audio et/ou vidéo sont stockés dans des zones prédéfinies d'une mémoire de données 14. La mémoire 14 est typiquement un disque dur. Le terminal 10 comporte également une logique de décodage audio/vidéo 15 pour la génération des signaux audiovisuels envoyés à l'écran 11, et une mémoire 16 contient le logiciel d'exploitation du terminal et des applications spécifiques. Selon le présent exemple, la mémoire 16 contient au moins un module interface utilisateur pour la reproduction de documents téléchargés. Pour la clarté du schéma, la mémoire 16 est représentée sous la forme d'un seul bloc, mais peut comporter à la fois de la mémoire vive, de la mémoire morte et de la mémoire persistante reprogrammable (par exemple de type 'Flash').

Le terminal 10 comporte également une interface infrarouge 17 d'une télécommande 18, ladite interface transmettant les signaux reçus à l'unité centrale 12. La télécommande est dotée des touches de navigation 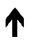 , 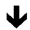 , 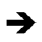 et 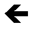 , « Menu » et une touche de validation « OK ». L'utilisation de touches de navigation ne limite en rien l'invention à ce type de touches, l'utilisation de touches de direction « Haut » et « Bas » ou d'une souris, ou tout autre moyen de pointage pour naviguer sur une liste affichée est tout à fait envisageable, de même l'introduction de commandes vocales est possible.

Un générateur de caractères 19, appelé souvent circuit OSD, de l'Anglais "On Screen Display" (signifiant littéralement "affichage sur l'écran") permet la génération de menus de commande ou de graphique relatifs au paramétrage du terminal 10 ou à une application particulière. Le signal vidéo généré par ce générateur de caractères est multiplexé avec l'un des signaux vidéo en provenance des moyens de réception de documents audiovisuels vers une prise Péritel (prise SCART en anglais) reliée à l'écran de visualisation 11. De façon optionnelle, le terminal 10 est relié à une antenne, elle-même reliée à un moyen de réception 20 qui comprend un tuner fournissant un signal à un démodulateur, les données reçues sont corrigées par un circuit correcteur et transmises à un démultiplexeur. Le démultiplexeur comporte un certain nombre de filtres programmés par l'unité centrale 12 pour recevoir des contenus audiovisuels déterminés.

Après avoir détaillé les principaux éléments mettant en oeuvre l'invention selon un exemple de réalisation, nous allons maintenant expliquer comment ceux-ci coopèrent.

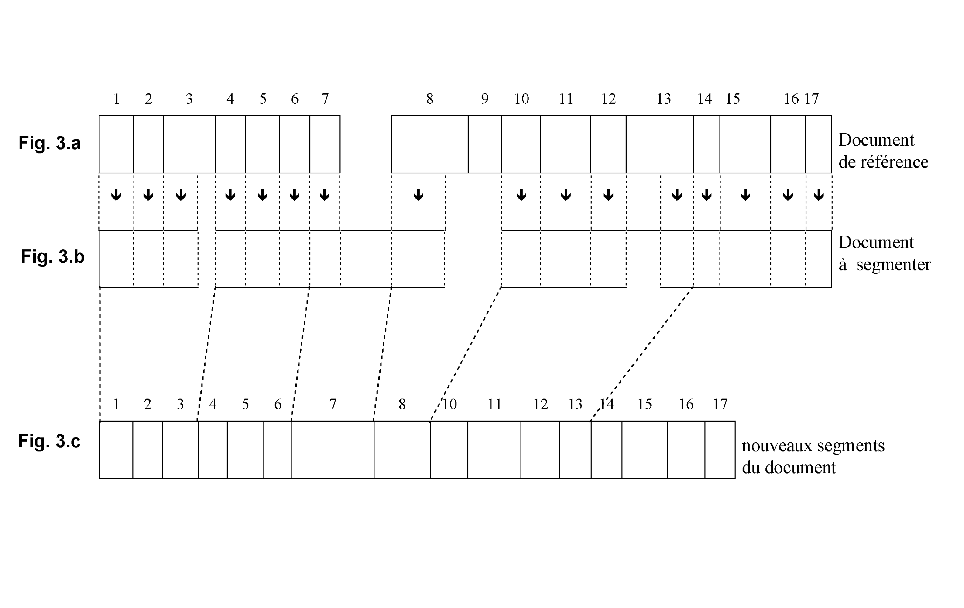

Les figures 3, 4 et 5 montrent plusieurs façons de segmenter un document multimédia par rapport à un document de référence.

Prenons tout d'abord la figure 3. Le procédé consiste à diviser un document sélectionné par un opérateur de réseau ou par l'utilisateur du terminal 10 en plusieurs parties ayant une unité sémantique et à affecter un identificateur à chaque segment. Généralement, la coupure entre deux segments coïncide avec une rupture de séquence vidéo (ou « cut » en Anglais). La figure 3.a représente le contenu audiovisuel d'un document de référence, l'axe horizontal étant l'axe du temps. Ce document de référence est chapitré, c'est-à-dire qu'il possède un tableau des chapitres comportant des groupes de données associant un identificateur à un index pointant l'image de début de ce chapitre. La figure 3.b représente le même document mais sous une autre version, par exemple extraite d'un site de téléchargement. Ce document n'a pas besoin d'être préalablement chapitré, ou du moins, s'il l'est, les précédents chapitres ne sont pas pris en compte, la présente invention permet de segmenter un document en se basant sur un document de référence. Par exemple, plusieurs versions d'un document peuvent exister, ainsi il existe la version cinéma d'un film et celle du réalisateur, ou celle destinée à la télévision. Des versions d'un même document peuvent être augmentées par une page publicitaire, un bulletin météo ou un commentaire sur le document. Ces différentes versions qui ont le même identificateur, ont des durées variables et peuvent comporter un nombre de chapitres différents. Les représentations du document de référence de la figure 3.a et du document à segmenter de ce même document de la figure 3.b présentent des différences : les chapitres 3, 8 et 13 du document de référence sont tronqués, et du contenu audiovisuel entre les chapitres 7 et 8 du document de référence a été rajouté dans la version à segmenter.

Dans un premier temps, le document à segmenter est comparé avec le document de référence de façon à déterminer les images identiques et à retrouver les limites de segments, tout en respectant la chronologie des images. La comparaison s'effectue images par images selon des techniques connues en soi telles que :
- Le traitement par « fingerprint ». Les deux contenus vidéo sont analysés pour élaborer des signatures graphiques. Chaque signature est représentative d'une image. Si deux signatures correspondent alors les images extraites des deux documents sont considérées comme identiques.
- Le traitement « Alignement lâche » (ou en Anglais : « Coarse Matching »). Des images espacées d'une certaine durée sont analysées afin de produire une signature graphique. Les signatures d'images extraites des deux documents sont alors comparées et si elles correspondent alors les images sont considérées comme identiques.
- Le traitement « Alignement fin » (ou en Anglais : « Fine Matching ». En plus du traitement « Alignement lâche », si les signatures correspondent, un second traitement vient analyser toutes les trames des images afin de confirmer que des parties entières des deux documents sont bien identiques.
- Le filtrage consiste à découvrir dans les deux documents les ruptures de séquence (« cut »). Puis, les images avant ou après les ruptures sont comparées de façon à déterminer la correspondance entre les différentes ruptures de séquence de chaque document.

Ces techniques permettent de découvrir les correspondances entre les images des deux documents, ces correspondances se présentent sous la forme de couples de marqueurs temporels (« Time stamp » en Anglais) pointant des images identiques dans chacun des documents. Les images de fin et de début de segment du document de référence peuvent ainsi être localisées dans le document à segmenter et marquées dans celui-ci comme le début ou la fin d'un segment déterminé. Ainsi, le document est segmenté en utilisant le tableau des chapitres du document de référence. Après ce traitement, n'importe quelle version d'un document peut bénéficier d'un chapitrage de référence et ainsi l'utilisateur peut naviguer au sein du document qu'il a téléchargé.

Supposons que des chapitres manquent dans le document à segmenter, cette éventualité intervient notamment lorsque le document est disponible dans des pays où certaines scènes (par exemple violentes ou érotiques) sont censurées. Les chapitres étant numérotés chronologiquement, certains numéros sont absents dans le chapitrage du document à segmenter. La figure 3.c montre par exemple que le chapitre 9 du document de référence n'existe pas dans le document à segmenter. Il peut être intéressant de conserver le même nombre de chapitres que celui du document de référence. Selon un premier mode de réalisation si un segment déterminé du document de référence n'est pas présent dans le document à segmenter, c'est-à-dire qu'aucune image de ce segment n'est présente dans le document de référence, alors l'identificateur du chapitre non présent est rajouté aux identificateurs du chapitrage du document à segmenter et la durée de ce chapitre est nulle.

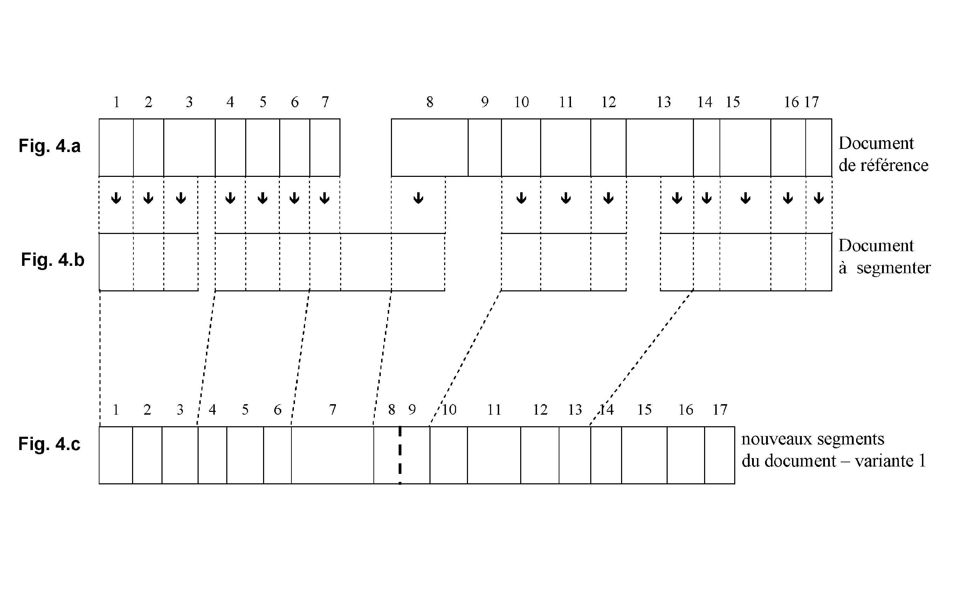

Prenons maintenant la figure 4, les figures 4.a et 4.b sont respectivement identiques aux figures 3.a et 3.b. La figure 4 illustre un autre mode de réalisation, qui permet notamment d'éviter la présence de trous dans le chapitrage basé sur le document de référence, le chapitre précédent celui ou ceux manquant ou le chapitre suivant celui ou ceux manquant dans le document à segmenter est divisé en deux parties. Dans la figure 4.c, la première partie est numérotée « 8 » et la seconde est numérotée « 9 ». Le choix pour déterminer si c'est le chapitre précédent ou suivant qui est divisé peut s'effectuer en prenant en compte la taille : c'est celui dont la reproduction est la plus longue qui est choisi. Si plusieurs chapitres manquent, alors le chapitre précédent dans la version à segmenter est divisé autant de fois plus une que de chapitres manquants. Selon un perfectionnement, le découpage entre chaque partie du segment à diviser qui précède ou suit le segment qui n'est pas présent, s'effectue lors d'une transition de séquence. De cette façon, une même séquence n'est pas coupée. Une autre façon de faire consiste à analyser le contenu sémantique des images de façon à ne pas couper une scène en deux.

Selon un perfectionnement, si le contenu audiovisuel d'un chapitre du document à segmenter contient une partie qui n'est pas dans le document de référence, alors il est possible d'indiquer la partie supplémentaire par un identificateur de chapitre qui n'est pas utilisé pour identifier un segment du document de référence.

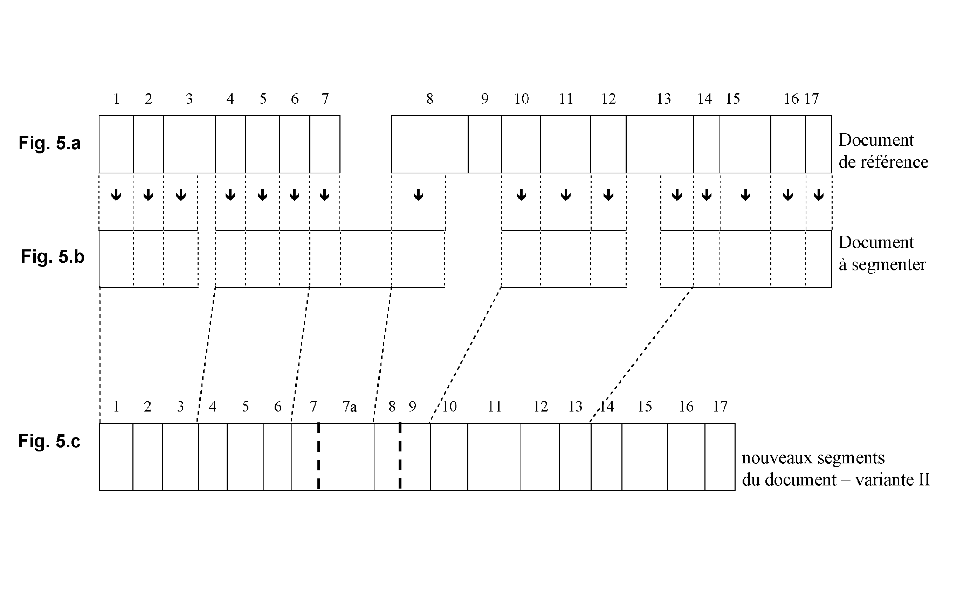

Prenons la figure 5, les figures 5.a et 5.b sont respectivement identiques aux figures 3.a et 3.b. La figure 5 illustre une seconde variante de réalisation de la segmentation d'un document. Le chapitre 7 du document à segmenter est plus long que le chapitre correspondant dans le document de référence. Selon la variante illustré par la figure 5.c, ce chapitre est divisé en deux, la partie commune avec celle du document de référence est identifiée avec le même identificateur : « 7 » et l'autre partie qui est supplémentaire est appelée par exemple « 7a ». Ce découpage est particulièrement utile lorsque l'utilisateur découvre que la partie supplémentaire est une page de publicité. En effectuant un saut de chapitre, il peut sauter cette page. Selon un perfectionnement, le découpage d'un segment en au moins deux parties ne s'effectue que si la durée de reproduction de la partie non présente dans le document de référence est supérieure à une durée déterminée. De cette manière, des chapitres trop courts ne sont pas présentés à l'utilisateur.

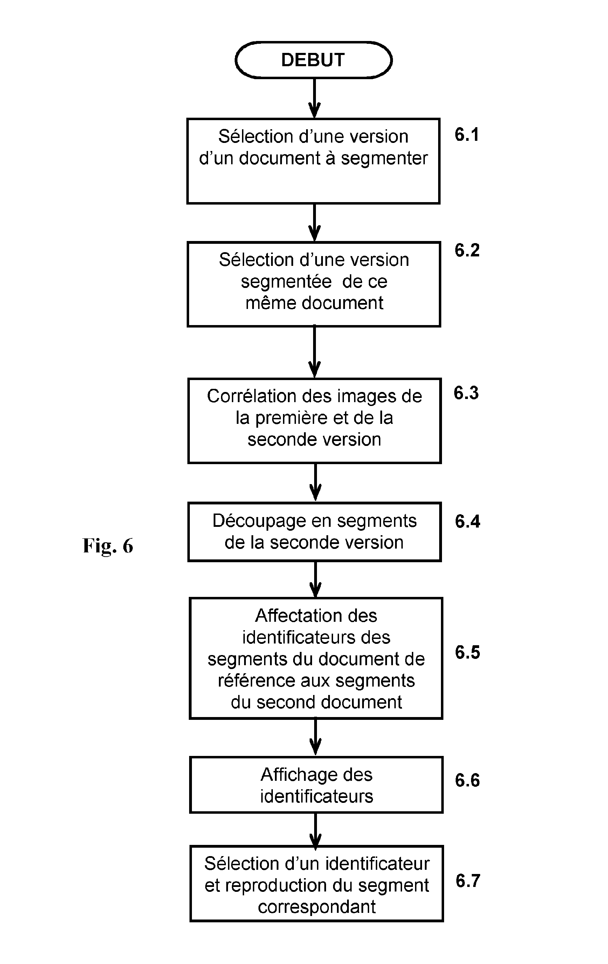

La figure 6 représente un organigramme montrant l'enchaînement des étapes pour segmenter un document. A l'étape 6.1, un utilisateur allume son appareil multimédia 10 et lance un menu de navigation pour sélectionner un document. Une fois sélectionné, l'utilisateur fait appel au serveur 1 pour segmenter ledit document en fonction du document de référence associé. Le serveur 1 recherche dans une base de données une version dite « de référence » de ce même document, la version à segmenter étant alors considérée comme une seconde version. La recherche s'effectue à l'aide des mêmes informations introduites par l'utilisateur, notamment le titre, l'année de réalisation ou le producteur. A l'étape 4.2, le serveur 1 trouve une version de référence du document, cette version étant segmentée et dotée d'un chapitrage, c'est-à-dire d'un tableau associant un identificateur de chapitre et un index pointant l'image de début de ce chapitre dans le document. A l'étape 6.3, le serveur 1 corrèle des images du document de référence et des images de la version de ce même document que l'utilisateur désire télécharger, afin de déterminer l'identité entre des images du document de référence et du document à segmenter. La corrélation peut prendre en compte la chronologie des images dans chacune des versions dudit document. Les techniques de corrélation d'images ont été décrites précédemment.

A l'étape 6.4, le serveur 1 découpe en segments continus d'images le document à segmenter. Ce découpage doit tenir compte des parties du document absentes du document de référence et réciproquement, des parties audiovisuelles du document de référence absentes du document à segmenter. Des morceaux de chapitre peuvent manquer, ou un chapitre entier, ou plusieurs chapitres entiers. Si avant l'exécution de la méthode, ce document est déjà segmenté, le serveur 1 n'en tient aucun compte. Il est en effet inutile d'associer deux segmentations pour un même document. Le découpage en nouveaux segments du document s'effectue de façon qu'une partie au moins des images d'un nouveau segment soit identique à une partie d'images d'un même segment du document de référence, et de façon que les images d'un segment du document de référence soient identiques à des images d'un seul segment du document à segmenter. A l'issue de l'étape 6.4, les segments du document de référence et les parties du document à segmenter qui ont des images identiques, sont associés.

A l'étape 6.5, les identificateurs des segments du document de référence sont affectés aux segments associés au document à segmenter. Le document à segmenter est alors doté d'un tableau de chapitrage associant chaque identificateur de chapitre avec un index pointant l'image de début de ce chapitre dans le document. Les mêmes identificateurs identifiant les chapitres du document de référence sont utilisés pour identifier les chapitres nouvellement créés à partir du document nouvellement segmenté.

Le document nouvellement segmenté ainsi que son tableau de chapitrage sont transmis au terminal 10. A l'étape 6.6, l'utilisateur sélectionne ce document et lance un menu de navigation capable d'afficher les identificateurs de chapitres. A l'étape 6.7, l'utilisateur sélectionne un identificateur du document nouvellement segmenté, le menu de navigation recherche alors l'index associé à cet identificateur et lance la reproduction du chapitre du document nouvellement segmenté qui est pointé par la valeur de cet index. Selon le type de navigateur ou l'option choisie, seul le segment sélectionné est reproduit, ou le document est reproduit à partir du segment sélectionné.

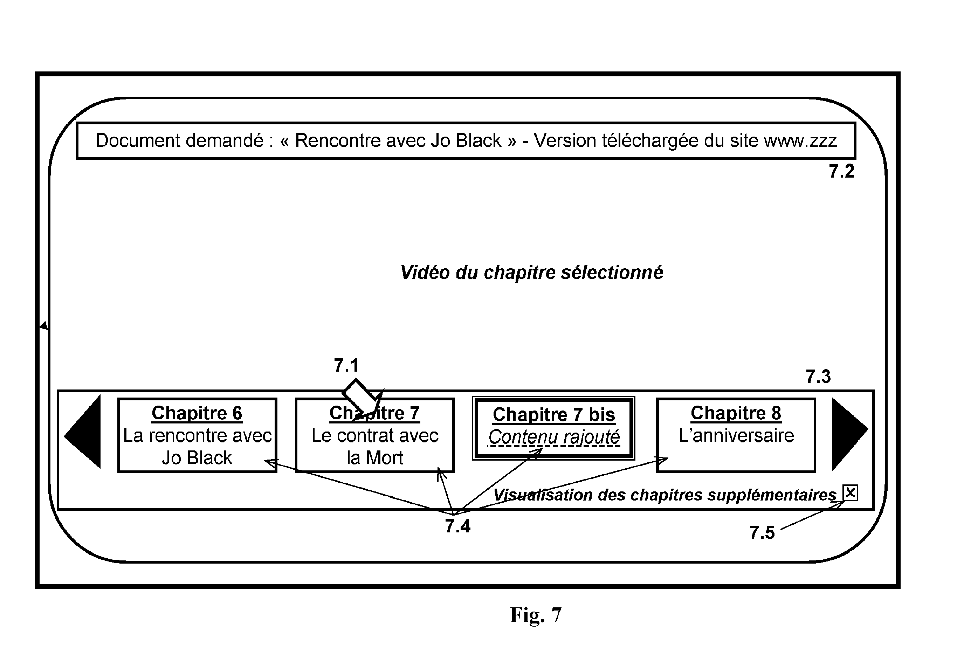

La figure 7 montre une apparence d'écran générée par un module logiciel dans la mémoire programme 16 du terminal 10. Avant l'affichage de l'apparence d'écran de la figure 7, l'utilisateur a sélectionné un document segmenté selon la méthode décrite par la figure 6. Puis, l'utilisateur a lancé la reproduction dudit document en appuyant sur la touche « Menu » de la télécommande 18. L'exemple de menu de navigation illustré par la figure 7 apparaît alors.

Un curseur 7.1 permet de sélectionner les différents éléments du menu affiché. L'utilisateur déplace le curseur 7.1 à l'aide d'un moyen de pointage tel que des touches de direction de la télécommande 8 ou une souris connectée au terminal 10. En mode navigation, l'écran affiche un bandeau supérieur 7.2 montrant le titre du document demandé et les informations sur les conditions de téléchargement, le site par exemple, la durée de visualisation. De cette manière, l'utilisateur voit de quelle version du document il s'agit. L'écran affiche un bandeau inférieur de navigation 7.3. Ce bandeau comporte une pluralité d'icones 7.4 contenant chacun un identificateur du chapitre du document nouvellement segmenté selon le procédé décrit précédemment. Les icônes peuvent également contenir des informations supplémentaires fournies par le document de référence notamment le titre du chapitre, la durée ou le nom des acteurs présents. L'utilisateur sélectionne l'icône d'un chapitre à l'aide du curseur 7.1 et en appuyant sur la touche « OK » lance la reproduction du chapitre sélectionné au moins. Le contenu vidéo de ce chapitre apparaît en fond d'écran. En appuyant sur une autre touche, l'utilisateur fait disparaître le menu de navigation. Dans le bandeau 7.3, on peut voir la présence d'un chapitre 7 et d'un chapitre 7bis, indiquant que le chapitre 7 dont le contenu audiovisuel se trouve dans le document de référence. Le chapitre 7 bis est un contenu supplémentaire qui est compris dans le document sélectionné par l'utilisateur mais pas dans le document de référence. Selon un perfectionnement, le bandeau 7.3 contient une icône sélectionnable 7.5 appelée « Visualisation des chapitres supplémentaires ». Si cette icône 7.5 est activée, alors tous les chapitres sont affichés. Dans le cas contraire, seuls les chapitres du document nouvellement segmenté dont les images se trouvent aussi dans le document de référence, seront visualisés. La reproduction ne modifie pas le document nouvellement segmenté, mais consiste à extraire sélectivement certaines parties. Lors de la visualisation, l'utilisateur ne verra pas les parties supplémentaires qui ne sont pas dans le document de référence. Cette option est particulièrement utile lorsque ces parties qui ne sont pas dans le document de référence, constituent de la publicité et que l'utilisateur est allergique à ce type de contenu.

Il n'est pas forcément nécessaire de déporter la méthode de segmentation au sein d'un serveur et ensuite de télécharger au niveau du terminal 10 la nouvelle segmentation avec ou sans son document. Selon une variante de réalisation, le terminal décrit par la figure 2 peut disposer des moyens pour effectuer la segmentation selon le procédé décrit par la figure 6. Dans ce cas, les étapes 6.3, 6.4 et 6.5, sont mises en oeuvre par un module logiciel exécutable par l'unité centrale 12, ou tout autre moyen pour exécuter les étapes 6.3, 6.4 et 6.5 de la figure 6. Le terminal dispose alors d'un moyen de lecture du document de référence, par exemple un lecteur de support de document audiovisuel tel qu'un DVD, ledit lecteur étant incorporé ou relié au terminal 10. Le document à segmenter peut être téléchargé du réseau et enregistré dans la mémoire 14 ou être disponible via un autre lecteur de DVD connecté au terminal 10. Selon cette variante, l'utilisateur du terminal sélectionne une version d'un document qui occupe une place mémoire minimale, et lance en local le procédé de segmentation. La version sélectionnée est segmentée en utilisant le document de référence (à l'aide d'un DVD par exemple) puis le document nouvellement segmenté est sauvegardé dans la vidéothèque de l'utilisateur, dans la mémoire de données 14 par exemple. En sélectionnant des versions du document ayant une taille mémoire minimale, la mémoire de données 14 peut contenir davantage de contenus audiovisuels. A noter que l'utilisateur peut aussi graver un support optique (DVD ou CD par exemple) en y mémorisant un ou plusieurs documents nouvellement segmentés.

Des personnes versées dans l'art pourront adapter la présente invention sous de nombreuses autres formes spécifiques sans l'éloigner du domaine d'application de l'invention comme revendiqué. En particulier, le terminal électronique peut être tout appareil disposant d'un moyen de réception d'un document venant d'un réseau et d'une mémoire de stockage dans laquelle le document peut être téléchargé. Par conséquent, les présents modes de réalisation doivent être considérés à titre d'illustration mais peuvent être modifiés dans le domaine défini par la portée des revendications jointes.

## Revendications

1. Procédé pour segmenter un document audiovisuel disponible selon deux versions, une première version dudit document dite « de référence » étant préalablement segmentée et chaque segment associé à un identificateur, **caractérisé en ce qu'**il comporte :
une première étape de corrélation (6.3) des images de la version de référence et des images de l'autre version dudit document à segmenter, pour déterminer l'identité entre des images de la version de référence et de l'autre version dudit document à segmenter,
une étape de découpage (6.4) en segments continus d'images de l'autre version dudit document, une partie au moins des images d'un segment de l'autre version dudit document étant identiques à des images d'un même segment de la version de référence dudit document, et les images d'un segment de la version de référence dudit document étant identiques à des images d'un seul segment de l'autre version dudit document,
une étape d'affectation (6.5) des identificateurs des segments de la version de référence dudit document aux segments correspondants de l'autre version dudit document.

2. Procédé pour segmenter un document selon la revendication 1, **caractérisé en ce que** si au moins un segment de la version de référence dudit document n'est pas présent dans l'autre version dudit document, alors le segment de l'autre version dudit document qui précède ou succède au segment qui n'est pas présent est découpé chronologiquement en une première et au moins une seconde partie, chaque identificateur de l'au moins un segment qui n'est pas présent étant associé à une seconde partie.

3. Procédé pour segmenter un document selon la revendication 2, **caractérisé en ce que** toutes les parties du segment de l'autre version dudit document qui précède ou succède au segment qui n'est pas présent ont des durées égales.

4. Procédé pour segmenter un document selon la revendication 2, **caractérisé en ce que** le découpage entre chaque partie du segment de l'autre version dudit document qui précède le segment qui n'est pas présent s'effectue lors d'une transition de séquence.

5. Procédé pour segmenter un document selon la revendication 1, **caractérisé en ce que** si un segment de la version de référence dudit document n'est pas présent dans l'autre version dudit document, alors l'identificateur du segment non présent est rajouté aux identificateurs et une indication signifiant que ledit segment n'est pas présent est reproduite.

6. Procédé pour segmenter un document selon la revendication 1, **caractérisé en ce que** si une partie d'un segment de l'autre version dudit document n'est pas présente dans la version de référence dudit document, alors ladite partie est associée à un nouvel identificateur non utilisé pour identifier des segments de la version de référence dudit document.

7. Procédé pour segmenter un document selon la revendication 6, **caractérisé en ce que** la partie d'un segment de l'autre version dudit document non présente dans la version de référence dudit document est associée à un nouvel identificateur si la durée de ladite partie est supérieure à une durée déterminée.

8. Procédé pour segmenter un document selon la revendication 6 ou 7, **caractérisé en ce qu'**il comporte une étape de visualisation de l'autre version dudit document en ne visualisant que les parties qui sont présentes dans la version de référence dudit document.

9. Procédé pour segmenter un document selon l'une quelconque des revendications précédentes, **caractérisé en ce que** des informations complémentaires autres que l'identificateur sont associées à chaque segment de la version de référence dudit document, ledit procédé comprenant une étape d'association des informations complémentaires aux segments correspondant à l'autre version dudit document, lesdites informations complémentaires étant accessibles en sélectionnant le segment correspondant de l'autre version dudit document.

10. Procédé pour segmenter un document selon l'une quelconque des revendications précédentes, **caractérisé en ce qu'**il comprend une étape d'affichage (6.6) des identificateurs associés à chaque segment de l'autre version dudit document, la sélection d'un identificateur déclenchant la reproduction du segment de l'autre version dudit document associé.

11. Appareil (1 ; 10) de traitement de document multimédia comprenant un moyen de stockage (4 ; 14) d'une première version d'un document dite « de référence » et d'une autre version dudit document ; **caractérisé en ce qu'**il comporte :
un moyen de corrélation (2, 3 ; 12, 16) des images de la version de référence dudit document et des images d'une autre version dudit document afin de déterminer l'identité entre des images de la version de référence dudit document et de l'autre version dudit document, la corrélation prenant en compte la chronologie des images dans chacune des versions dudit document,
un moyen de découpage (2, 3 ; 12, 16) en segments continus d'images de l'autre version dudit document, une partie au moins des images d'un segment de l'autre version dudit document étant identiques à des images d'un même segment de la version de référence dudit document, et les images d'un segment de la version de référence dudit document étant identiques à des images d'un seul segment de l'autre version dudit document,
un moyen d'affectation (2, 3 ; 12, 16) des identificateurs des segments de la version de référence dudit document aux segments correspondants de l'autre version dudit document.
